# EUROPEAN PATENT APPLICATION

(11) **EP 1 403 352 A1**
(43) Date of publication of application: **31.03.2004**
(21) Application number: 02726459.7
(22) Date of filing: 22.05.2002
(51) Int. Cl.: C09J 5/02, C09J 143/04, C09J 183/00, C09K 3/10

(54) **PRIMER COMPOSITION AND METHOD OF BONDING THEREWITH**

(30) Priority: 08.06.2001 JP 2001173824
(71) Applicant: Kaneka Corporation, Osaka 530-8288 (JP)
(72) Inventor: OKAMOTO, Toshihiko, Kobe-shi, Hyogo 655-0002 (JP); HAGIWARA, Kazuo, Takasago-shi, Hyogo 676-0025 (JP); TAKASE, Junji, Akashi-shi, Hyogo 673-0011 (JP)
(74) Representative: Jacob, Reuben Ellis
(86) International application number: PCT/JP2002/004967
(87) International publication number: WO 2002/100967

(57) **Abstract**

The invention provides a primer composition excellent in adhesion to porous substrates and a method of bonding. Disclosed is a primer composition comprising: (A) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (b) 20 to 95 wt% of an alkyl (meth)acrylate monomer wherein the alkyl has 1 to 8 carbon atoms; and (B) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (c) 20 to 95 wt% of an alkyl (meth)acrylate monomer wherein the alkyl has 10 or more carbon atoms, as well as a method of bonding a sealant to a substrate, characterized by applying the primer composition onto a substrate and then allowing a sealant to adhere to the resulting coated surface of the substrate.

## Description

### TECHNICAL FIELD

The present invention relates to a primer composition and a method of bonding a sealant to a substrate, characterized by applying the primer composition onto a substrate and then allowing a sealant to adhere to the resulting coated surface of the substrate. The present invention relates in particular to a primer composition effective for a sealant (particularly an isobutylene sealant having an isobutylene polymer as a major-chain skeleton) based on an organic polymer having a silicon-containing group (reactive silicon group) which bears a hydroxyl or hydrolyzable group bonded to the silicon atom and causes crosslinking via the formation of a siloxane linkage.

### BACKGROUND ART

An elastic sealant came to be widely used in buildings and automobiles in recent years. The sealant is a material used for the purpose of imparting water tightness and air tightness by applying it into joining areas or gaps (referred to hereinafter as "joints") among various members. Accordingly, the sealant should have good adhesion to various substrates in joints or around window frames, that is, inorganic materials such as glass, ceramics, metal, cement and mortar and organic materials such as plastics (hereinafter referred to collectively as substrate). However, the adhesion of the sealant itself is often poor in adhesion, and use of a primer is essential in many cases.

As the sealants applied onto joints in the interior and exterior of general buildings, sealants based on silicone, modified silicone, polysulfide and polyurethane are well-known. These sealants are used on the basis of the way of thinking of "the right material in the right place" according to which a sealant suitable for each type of joint (including the type of substrate) is selected for use, and a special primer adapted to each sealant has been developed.

On the other hand, an isobutylene sealant comprising, as a main-chain skeleton, an isobutylene polymer containing a reactive silicon group has been developed recently. This isobutylene sealant is excellent in movement accommodation, heat resistance, weatherability, water resistance and paintability and does inherently not stain the surroundings of joints, to exhibit performance as a universal sealant. As a primer effective for this isobutylene sealant, a primer composition comprising a saturated hydrocarbon polymer having a reactive silicon group is disclosed in JP-A 11-343429, but even if this primer is used, there is a problem that the adhesion of the isobutylene sealant to porous substrates such as concrete, a mortar plate and a slate plate is unsatisfactory.

As a primer effective for adhesion of silicone elastomers to porous substrates or various metal substrates, a primer composition comprising an acryl copolymer having a reactive silicon group is disclosed in JP-A 52-43831. However, when a low-polar sealant such as the above-mentioned isobutylene sealant is used, a primer based on a high-polar acryl copolymer having high glass transition point (Tg) shows excellent film formability on a porous substrate, but is often poor in compatibility with the isobutylene sealant and particularly poor in water-resistant adhesion. On the other hand, when a primer based on a low-polar acryl copolymer having low Tg is used, the primer is often poor in film formability on a significantly uneven porous substrate, thus failing to attain sufficient adhesion.

For the purpose of improving the adhesion of modified silicon sealants, a primer composition comprising a reactive silicon-containing copolymer essentially comprising an alkyl (meth)acrylate monomer having a long alkyl group is disclosed in JP-A 7-11199, but in this case too, water-resistant adhesion to porous substrates is still not at a sufficient level.

### DISCLOSURE OF THE INVENTION

The object of the present invention is to provide a primer composition excellent in adhesion to a porous substrate. In particular, the object of the present invention is to provide a primer composition excellent in water-resistant adhesion to allow a sealant essentially comprising an organic polymer having a reactive silicon group to adhere excellently to a significantly uneven porous substrate or a highly basic porous substrate, as well as a method of bonding therewith.

The present inventors made extensive study to solve such problems, and as a result, they found that a primer composition comprising a high-polar vinyl copolymer having a reactive silicon group in combination with a low-polar vinyl copolymer having a reactive silicon group can achieve the object, thus completing the present invention.

That is, a first aspect of the invention is concerned with a primer composition comprising:
(A) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (b) 20 to 95 wt% of an alkyl (meth)acrylate monomer wherein the alkyl has 1 to 8 carbon atoms; and
(B) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (c) 20 to 95 wt% of an alkyl (meth)acrylate monomer wherein the alkyl has 10 or more carbon atoms.

A preferable embodiment is concerned with the primer composition described above which further comprises tackifier as component (C).

A further preferable embodiment is concerned with the primer composition described above which further comprises a silicate compound as component (D).

A further preferable embodiment is concerned with the primer composition described above which further comprises a silane coupling agent as component (E).

A further preferable embodiment is concerned with the primer composition described above wherein the silane coupling agent as component (E) is an amino-containing silane coupling agent and/or a mercapto-containing silane coupling agent.

A further preferable embodiment is concerned with the primer composition described above wherein the vinyl copolymer as component (A) and the vinyl copolymer as component (B) have a number-average molecular weight in the range of 500 to 50,000, and bear at least one hydrolyzable silyl group per molecule at the end of a main chain and/or the end of a side chain, the silyl group being represented by the general formula (1): 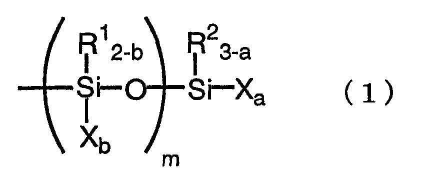 wherein R¹ and R² independently represent a C₁₋₂₀ alkyl group, a C₆₋₂₀ aryl group, a C₇₋₂₀ aralkyl group, or a triorganosiloxy group represented by (R')₃SiO- whereupon R' groups independently represent a C₁₋₂₀ substituted or unsubstituted hydrocarbon group; X groups independently represent a hydroxyl group or a hydrolyzable group; a is 0, 1, 2 or 3 and b is 0, 1 or 2 provided that a and b are not simultaneously 0; and m is 0 or an integer of 1 to 19.

A second aspect of the invention is concerned with a method of bonding a sealant to a substrate, characterized by applying the primer composition described above onto a substrate and then allowing a sealant to adhere to the resulting coated surface of the substrate.

A preferable embodiment is concerned with the bonding method described above wherein the sealant is a sealant based on an organic polymer having at least one silicon-containing group which bears a hydroxyl or hydrolyzable group bonded to the silicon atom and causes crosslinking via the formation of a siloxane linkage.

A further preferable embodiment is concerned with the bonding method described above wherein the sealant is an isobutylene sealant based on an isobutylene polymer having at least one silicon-containing group which bears a hydroxyl or hydrolyzable group bonded to the silicon atom and causes crosslinking via the formation of a siloxane linkage.

Hereinafter, the present invention is described in more detail.

The vinyl copolymer as component (A) used in the present invention is a polymer based on (a) a monomer having a reactive silicon group and (b) an alkyl (meth)acrylate monomer wherein the alkyl has 1 to 8 carbon atoms, and is thus a component having higher polarity and higher Tg than those of the polymer as component (B) based on (a) a monomer having a reactive silicon group and (c) an alkyl (meth)acrylate monomer wherein the alkyl has 10 or more carbon atoms. Accordingly, the component (A) functions as a component excellent in formation of a film on porous substrates and forming a strong cured coating excellent in adhesion to various substrates.

The (meth)acryl in the present invention refers to acryl and/or methacryl.

On the other hand, the vinyl copolymer as component (B) is a polymer based on (a) a monomer having a reactive silicon group and (c) an alkyl (meth)acrylate monomer wherein the alkyl has 10 or more carbon atoms, and is thus a component having lower polarity than that of the component (A). Accordingly, the component (B) functions as a component compatible well with a low-polar sealant such as an isobutylene sealant.

Both the vinyl copolymers as components (A) and (B) are those having, an essential component, a monomer containing a reactive silicon group, and these vinyl copolymers containing reactive silicon groups are referred to collectively as reactive silicon-containing vinyl polymer.

The reactive silicon group includes groups represented by the general formula (1): 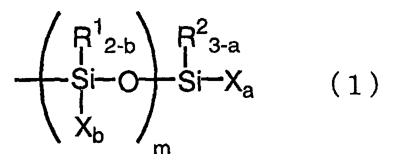 wherein R¹ and R² independently represent a C₁₋₂₀ alkyl group, a C₆₋₂₀ aryl group, a C₇₋₂₀ aralkyl group, or a triorganosiloxy group represented by (R')₃SiO- whereupon R' groups independently represent a C₁₋₂₀ substituted or unsubstituted hydrocarbon group; X groups independently represent a hydroxyl group or a hydrolyzable group; a is 0, 1, 2 or 3 and b is 0, 1 or 2 provided that a and b are not simultaneously 0; and m is 0 or an integer of 1 to 19.

The hydrolyzable group includes, for example, generally used groups such as a hydrogen atom, a halogen atom, an alkoxy group, an acyloxy group, a ketoxymate group, an amino group, an amide group, an aminooxy group, a mercapto group and an alkenyloxy group.

Among these groups, an alkoxy group, an amide group and an aminooxy group are preferable, and an alkoxy group is particularly preferable in respect of moderate hydrolyzability and easy handling.

One to three of such hydrolyzable or hydroxyl groups can be bonded to one silicon atom, and (a + Σb) is preferably in the range of 1 to 5. When two or more hydrolyzable or hydroxyl groups are bonded to the reactive silicon group, these groups may be the same or different.

The number of silicon atoms forming the reactive silicon group is 1 or more, but the number of silicon atoms linked through a siloxane linkage etc. is preferably 20 or less.

In particular, a reactive silicon group represented by the following general formula (2) is preferable because of easy availability. 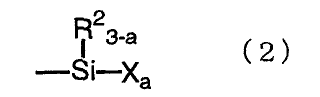 wherein R², X and a have the same meaning as defined above.

The phrase "reactive silicon-containing vinyl polymer has at least one reactive silicon group per molecule at the end of a main chain and/or the end of a side chain" means that the polymer has one, preferably two or more reactive silicon groups per molecule at the end of a main chain and/or the end of a side chain of the polymer. Because the polymer has at least one reactive silicon group per molecule, the polymer attains a higher molecular weight or forms a gel in the presence of water, to form chemically stable siloxane linkages thus improving the chemical resistance of its coating. Further, the reactive silicon group has high affinity for inorganic substrates and causes crosslinking reaction in the presence of water, resulting in excellent adhesion of the coating to inorganic substrates.

The number of moles of the reactive silicon group per unit weight (referred to hereinafter as "Si equivalent") in the reactive silicon-containing vinyl polymer is preferably 0.2 to 5.0 mmol/g, more preferably 0.5 to 4.0 mmol/g, still more preferably 1.0 to 3.0 mmol/g. An Si equivalent outside of the above range is not preferable because when the Si equivalent is less than 0.2 mmol/g, the adhesion and film formability of the primer composition may not be sufficient, while when it is higher than 5.0 mmol/g, the shelf stability of the primer composition may be deteriorated.

The number-average molecular weight of the reactive silicon-containing vinyl polymer, in terms of polystyrene equivalent molecular weight determined by GPC (HLC-8120GPC (THF solvent) manufactured by Tosoh Corporation) is preferably 500 to 50,000, more preferably 1,000 to 30,000 for easier handling. A number-average molecular weight outside of the above range is not preferable because when the number-average molecular weight is less than 500, the film formability of the primer composition may not be sufficient, while when it is higher than 50,000, the workability of the primer composition may be deteriorated due to higher viscosity.

The glass transition temperature (Tg) of the polymer is not particularly limited either, but when the Tg is for example as low as 10°C or less, the polymer shows a feature of low shrinkage, while when the Tg is as high as 30°C or more, the polymer shows a feature of improvements in film formability on porous substrates, chemical resistance, water resistance, and reinforcement of substrates,

Now, one example of the process for producing the vinyl copolymer as component (A) is described. The vinyl copolymer (A) can be produced by copolymerizing a monomer mixture comprising (a) 5 to 80 wt% of a monomer having a reactive silicon group and (b) 20 to 95 wt% of an alkyl (meth)acrylate monomer wherein the alkyl has 1 to 8 carbon atoms.

### Monomer (a)

The reactive silicon-containing monomer (a) includes, but is not limited to:

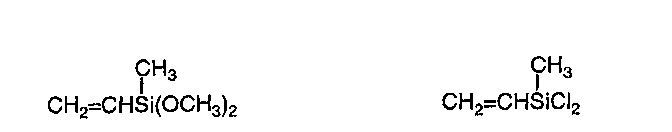

CH₂=CHSi(OCH₃)₃ CH₂=CHSiCl₃

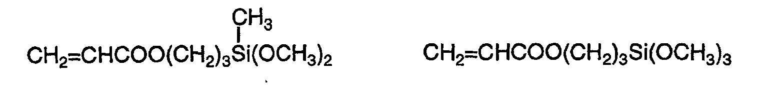

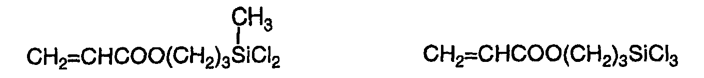

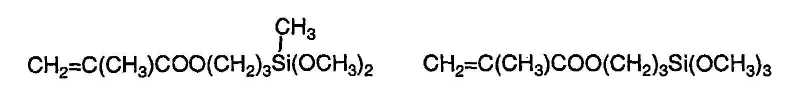

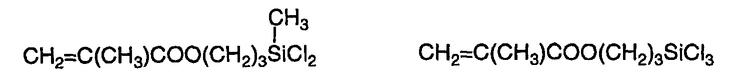

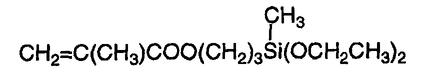

CH₂=C(CH₃)COO(CH₂)₃Si(OCH₂CH₃)₃

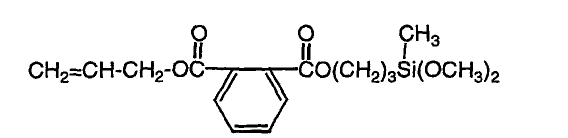

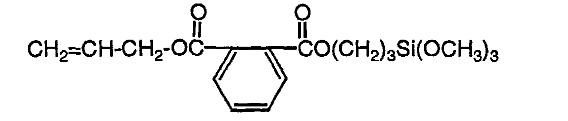

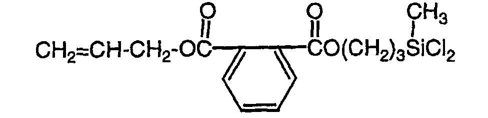

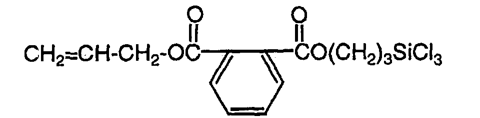

The amount of the monomer (a) used in the component (A) is preferably 5 to 80% by weight, more preferably 10 to 70% by weight, still more preferably 20 to 60% by weight based on the total amount of the polymer components. When the amount of the monomer (a) is less than 5% by weight, the adhesion and film formability of the primer composition may be insufficient, while when it is higher than 80% by weight, the shelf stability may be insufficient.

### Monomer (b)

The monomer (b), that is, the alkyl (meth)acrylate wherein the alkyl has 1 to 8 carbon atoms includes, for example, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, benzyl (meth)acrylate, cyclohexyl (meth)acrylate, trifluoroethyl (meth)acrylate and pentafluoropropyl (meth)acrylate.

The amount of the monomer (b) used in the component (A) is preferably 20 to 95% by weight, more preferably 30 to 90% by weight, still more preferably 40 to 80% by weight based on the total amount of the polymer components. When the amount of the monomer (b) used is less than 20% by weight, the film formability of the resulting composition on a significantly uneven porous substrate may be insufficient, while when the amount is higher than 95% by weight, the compatibility of the composition with a sealant poor in polarity may be deteriorated.

### Monomer (c)

In the component (A) in the present invention, a small amount of the alkyl (meth)acrylate wherein the alkyl has 10 or more carbon atoms as monomer (c) can be copolymerized in such a range as to achieve the object of the present invention, that is, in such a range as not to deteriorate the film formability of the resulting composition to porous substrates or the adhesion thereof to various substrates. Examples of the alkyl (meth)acrylate wherein the alkyl has 10 or more carbon atoms as monomer (c) include lauryl (meth)acrylate, tridecyl (meth)acrylate, cetyl (meth)acrylate, stearyl (meth)acrylate, docosanyl (meth)acrylate and behenyl (meth)acrylate.

When the component (c) is used in the component (A), the amount of the component (c) is preferably 0.01 to 10% by weight, more preferably 0.02 to 5% by weight, still more preferably 0.1 to 2% by weight, based on the total amount of the polymer components. When the amount of the component (c) is higher than 10% by weight, the Tg of the component (A) may be lowered to deteriorate film formability on significantly uneven porous substrates.

### Monomer (d)

In the component (A) in the present invention, the other copolymerizable monomer (d) can be copolymerized in such a range that the object of the present invention can be achieved, that is, in such a range that the adhesion of the primer composition to porous substrates is not deteriorated. The other copolymerizable monomer (d) includes, but is not limited to, unsaturated carboxylates such as diesters or half esters of polycarboxylic acids (maleic acid, fumaric acid, itaconic acid etc.) and C₁₋₂₀ linear or branched alcohols; aromatic hydrocarbon-based vinyl compounds such as styrene, α-methylstyrene, chlorostyrene, styrenesulfonic acid, 4-hydroxy styrene and vinyl toluene; vinyl esters and allyl compounds such as vinyl acetate, vinyl propionate and diallyl phthalate; nitrile-containing vinyl compounds such as (meth)acrylonitrile; epoxy-containing vinyl compounds such as glycidyl (meth)acrylate; amino-containing vinyl compounds such as dimethylaminoethyl (meth)acrylate, diethylaminoethyl (meth)acrylate, vinyl pyridine and aminoethyl vinyl ether; amide-containing vinyl compounds such as (meth)acrylamide, itaconic acid diamide, α-ethylacryl amide, methacryl amide, croton amide, maleic acid diamide, fumaric acid diamide, N-vinyl pyrrolidone, N-butoxymethyl (meth)acrylamide, N,N-dimethyl acrylamide, N-methyl acrylamide and acryloyl morpholine; hydroxyl-containing vinyl compounds such as 2-hydroxyethyl (meth)acrylate, 2-hydroxypropyl (meth)acrylate, 2-hydroxyethyl vinyl ether, N-methylol (meth)acrylamide, Aronix 5700 (Toagosei Co., Ltd.), Placcel FA-1, Placcel FA-4, Placcel FM-1 and Placcel FM-4 (Daicel Chemical Industries, Ltd.); unsaturated carboxylic acids, acid anhydrides or salts thereof, such as (meth)acrylic acid, maleic acid, fumaric acid, itaconic acid, salts thereof (alkali metal salts, ammonium salts, amine salts etc.), and maleic anhydride; and other vinyl compounds such as vinyl methyl ether, vinyl chloride, vinylidene chloride, chloroprene, propylene, butadiene, isoprene, maleimide, N-vinyl imidazole and vinyl sulfonic acid.

When the monomer (d) is used in the component (A), the amount of the monomer (d) is preferably 0.01 to 40% by weight, more preferably 0.02 to 20% by weight, still more preferably 0.1 to 10% by weight, based on the total amount of the polymer components. When the amount of the component (d) used is higher than 40% by weight, the adhesion of the primer composition to porous substrates may not be sufficient.

The content of the component (A) in the primer composition of the present invention is preferably 1 to 30% by weight, more preferably 3 to 20% by weight, still more preferably 5 to 15% by weight. When the content of the component (A) is less than 1% by weight, the film formability of the primer on porous substrates may be insufficient, while when the content is higher than 30% by weight, the viscosity of the primer becomes too high, thus deteriorating workability for coating. One kind of the component (A) may be used, or two or more kinds thereof may be used as a mixture.

The vinyl copolymer as component (B) can also be produced in the same manner as for component (A). The vinyl copolymer (B) can be produced by polymerizing a monomer mixture comprising (a) 5 to 80 wt% of a monomer having a reactive silicon group and (c) 20 to 95 wt% of an alkyl (meth)acrylate monomer wherein the alkyl has 10 or more carbon atoms.

Examples of the monomers (a) and (c) include the same monomers as described above.

The amount of the monomer (a) used in the component (B) is preferably 5 to 80% by weight, more preferably 10 to 70% by weight, still more preferably 20 to 60% by weight, based on the total amount of the polymer components. When the amount of the component (a) used is less than 5% by weight, the adhesion and film formability of the primer composition may be insufficient, while when the amount is higher than 80% by weight, the shelf stability may be insufficient.

The amount of the monomer (c) used in the component (B) is preferably 20 to 95% by weight, more preferably 30 to 90% by weight, still more preferably 40 to 80% by weight, based on the total amount of the polymer components. When the amount of the component (c) used is less than 20% by weight, the compatibility of the primer composition with a low-polar sealant may be deteriorated, while when the amount is higher than 95% by weight, the adhesion of the composition to various adherends may be deteriorated.

In the component (B) in the present invention, a small amount of the alkyl (meth)acrylate monomer (b) wherein the alkyl has 1 or 8 carbon atoms can be copolymerized in such a range as to achieve the object of the present invention, that is, in such a range as not to deteriorate the compatibility of the resulting composition with low-polar sealants. Examples of the monomer (b) include the same monomers as described above.

When the monomer (b) is used in the component (B), the amount of the monomer (b) is preferably 0.01 to 10% by weight, more preferably 0.02 to 5% by weight, still more preferably 0.1 to 2% by weight, based on the total amount of the polymer components. When the amount of the component (b) used is higher than 10% by weight, the polarity of the component (B) may be increased to deteriorate compatibility with low-polar sealants.

In the component (B) in the present invention, the other copolymerizable monomer (d) can be copolymerized in such a range that the object of the present invention can be achieved, that is, in such a range that the compatibility of the primer composition with low-polar sealants is not deteriorated. Examples of the monomer (d) include the same monomers as described above.

When the monomer (d) is used in the component (B), the amount of the monomer (d) used is preferably 0.01 to 40% by weight, more preferably 0.02 to 20% by weight, still more preferably 0.1 to 10% by weight based on the total amount of the polymer components. When the amount of the monomer (b) used is higher than 40% by weight, the compatibility of the primer composition with low-polar sealants may be deteriorated.

The content of the component (B) in the primer composition of the present invention is preferably 1 to 30% by weight, more preferably 3 to 20% by weight, still more preferably 5 to 15% by weight. When the amount of the monomer (B) used is less than 1% by weight, the compatibility of the primer composition with low-polar sealants may be deteriorated, while when the amount is higher than 30% by weight, the adhesion of the composition to various adherends may be deteriorated. One kind of the component (B) may be used, or two or more kinds thereof may be used as a mixture.

The method of producing the reactive silicon-containing vinyl polymer from the reactive silicon-containing monomer and the vinyl monomer is not particularly limited, and the reactive silicon-containing vinyl polymer can be produced according to methods described in, for example, JP-A 54-36395, JP-A 57-36109 and JP-A 58-157810. Solution polymerization using an azo radical initiator such as 2,2'-azobisisobutyronitrile or 2,2'-azobis(2-methylbutyronitrile) can be easily handled, and is most preferable in respect of direct usability of a mixture formed in the polymerization reaction.

In this production, a chain transfer agent such as n-dodecyl mercaptan, t-dodecyl mercaptan, n-butyl mercaptan, γ-mercaptopropyltrimethoxy silane, γ-mercaptopropyltriethoxy silane, γ-mercatopropylmethyldimethoxy silane, γ-mercaptopropylethyldimethoxy silane, (CH₃O)₃Si-S-S-Si(OCH₃)₃, or (CH₃O)₃Si-S₈-S-Si(OCH₃)₃ can be used to adjust the molecular weight of the polymer.

In particular, a chain transfer agent having a reactive silicon group in the molecule, for example γ-mercaptopropyltrimethoxy silane can be used to introduce a reactive silicon group into the end of the reactive silicon-containing vinyl polymer.

As the polymerization solvent, inert solvents such as hydrocarbons (toluene, xylene, n-hexane, cyclohexane etc.), acetates (ethyl acetate, butyl acetate etc.), alcohols (methanol, ethanol, isopropanol, n-butanol etc.), ethers (ethyl cellosolve, butyl cellosolve, cellosolve acetate etc.) and ketones (methyl ethyl ketone, ethyl acetoacetate, acetyl acetone, diacetone alcohol, methyl isobutyl ketone, acetone etc.) can be used without any particular limitation.

The tackifier as component (C) used in the present invention is excellent in adhesion to various substrates such as metal and glass, and functions as a component forming a film showing adhesion in a short curing time after applying various sealants such as isobutylene-based sealants.

The tackifier is not particularly limited, and any resin usually , used as an tackifier can be used. Examples of such resin include rosin-based resin such as rosin ester, hydrogenated rosin, polymerized rosin and modified rosin; terpene-based resin such as terpene phenol, α-pinene-based terpene resin, β-pinene-based terpene resin, diterpene-based terpene resin and hydrogenated terpene resin; petroleum-based hydrocarbon resin such as aromatic hydrocarbon resin, aliphatic hydrocarbon resin, alicyclic hydrocarbon resin and hydrogenated hydrocarbon resin; phenol-based resin such as alkyl phenol and modified phenol; ketone resin; xylene resin; styrene-based resin; rosin phenol resin; chroman-indene resin; and chroman resin. Among these resins, the terpene-based resin, petroleum-based hydrocarbon resin and styrene-based resin are preferable because of their significant effect on improvement of adhesion in a short time with less coloration of the primer solution. In the present invention, these tackifiers can be used alone or as a mixture thereof.

The content of the tackifier in the primer composition of the present invention is preferably 1 to 50% by weight, more preferably 3 to 30% by weight, still more preferably 5 to 10% by weight. The content of the tackifier outside of the above range is not preferable because the content is higher than 50% by weight, the viscosity of the primer composition is increased to deteriorate workability, while when the content is less than 1% by weight, the effect for exhibiting adhesion in a short curing time may be insufficient.

The silicate compound as component (D) used in the present invention functions as a component forming a cured coating excellent in adhesion to various substrates and simultaneously functions as a component improving the shelf stability of the primer composition by acting as a dehydrating agent. The silicate compound is an organosilicate compound represented by the general formula (3), or a partial hydrolyzate condensate thereof:

(R³O)_{4-c}SiR⁴ _{c} (3)

wherein R³ groups independently represent a hydrogen atom or a monovalent hydrocarbon group selected from an alkyl group containing 1 to 10 carbon atoms, preferably 1 to 4 carbon atoms, an aryl group, preferably an aryl group containing 6 to 9 carbon atoms, such as a phenyl group, and an aralkyl group, preferably an aralkyl group containing 7 to 9 carbon atoms, such as a benzyl group; R⁴ groups independently represent a monovalent hydrocarbon group selected from an alkyl group containing 1 to 10 carbon atoms, preferably 1 to 4 carbon atoms, an aryl group, preferably an aryl group containing 6 to 9 carbon atoms, such as a phenyl group, and an aralkyl group, preferably an aralkyl group containing 7 to 9 carbon atoms, such as a benzyl group; and c is 0 or 1.

Examples of the organosilicate compound include tetraalkyl silicate (tetraalkoxy silane) such as tetramethyl silicate, tetraethyl silicate, tetra n-propyl silicate, tetra i-propyl silicate, tetra n-butyl silicate, tetra i-butyl silicate and tetra t-butyl silicate; and trialkoxy silane or triaryloxy silane, for example alkyl trialkoxy silane such as methyl trimethoxy silane, methyl triethoxy silane, methyl tri-sec-octyloxy silane, methyl triisopropoxy silane and methyl tributoxy silane, and aryl trialkoxy silane such as phenyl trimethoxy silane and phenyl triethoxy silane, and alkyl triaryloxy silane such as methyl triphenoxy silane.

The partial hydrolyzate condensate of the organosilicate compound includes those obtained in a usual manner by adding water to the organosilicate compound such as tetraalkyl silicate, trialkoxy silane or triaryloxy silane and then partially hydrolyzing it and condensating the hydrolyzate. As the partial hydrolyzate condensate of an organosilicate compound, commercial products can be used. Such condensates include, for example, MSI51, ESI28 and ESI40 (all of which are produced by Colcoat Co., Ltd.).

The content of the silicate compound in the primer composition of the present invention is preferably 0.2 to 30% by weight, more preferably 0.5 to 10% by weight, still more preferably 1 to 5% by weight. A content of the silicate compound outside of the above range is not preferable because when the content is higher than 30% by weight, the speed of forming a coating of the primer composition may be decreased and the adhesion thereof may be deteriorated, while when the content is less than 0.2% by weight, the effect of improving adhesion or the effect of improving shelf stability may be insufficient. The silicate compounds may be used alone or as a mixture of two or more thereof.

The silane coupling agent as component (E) in the present invention forms a tough coating by reaction with the reactive silicon-containing vinyl polymer of the component (A) or (B), and simultaneously improves the adhesion of various sealants such as an isobutylene-based sealant and a modified silicone-based sealant to various substrates such as glass, metal and mortar. The silane coupling agent is a compound which has a hydrolyzable group-containing silicon atom (hereinafter referred to as hydrolyzable silicon group) and an other functional group. Examples of the hydrolyzable silicon group include those groups represented by the formula (1) wherein X is a hydrolyzable group. Specifically, mention can be made of the hydrolyzable groups enumerated above, among which a methoxy group, an ethoxy group etc. are preferable from the viewpoint of rate of hydrolysis. The number of hydrolyzable groups is preferably 2 or more, more preferably 3 or more, because the adhesion effect is improved as the number of the groups is increased.

The functional groups other than the hydrolyzable silicon group include, for example, a primary, secondary or tertiary amino group, a mercapto group, an epoxy group, a carboxyl group, a vinyl group, an isocyanate group, an isocyanurate, a halogen etc. Among these groups, a primary, secondary or tertiary amino group, a mercapto group, an epoxy group, an isocyanate group and an isocyanurate are preferable, and particularly an amino group and a mercapto group are most preferable because of their significant effect on improvements in adhesion.

Examples of the silane coupling agent include amino-containing silane such as γ-aminopropyltrimethoxy silane, γ-aminopropyltriethoxy silane, γ-aminopropyltriisopropoxy silane, γ-aminopropylmethyldimethoxy silane, γ-aminopropylmethyldiethoxy silane, γ-(2-aminoethyl)aminopropyltrimethoxy silane, γ-(2-aminoethyl)aminopropylmethyldimethoxy silane, γ-(2-aminoethyl)aminopropyltriethoxy silane, γ-(2-aminoethyl)aminopropylmethyldiethoxy silane, γ-(2-aminoethyl)aminopropyltriisopropoxy silane, γ-ureidopropyltrimethoxy silane, N-phenyl-γ-aminopropyltrimethoxy silane, N-benzyl-γ-aminopropyltrimethoxy silane and N-vinylbenzyl-γ-aminopropyltriethoxy silane; mercapto-containing silane such as γ-mercaptopropyltrimethoxy silane, γ-mercaptopropyltriethoxy silane, γ-mercaptopropylmethyldimethoxy silane and γ-mercaptopropylmethyldiethoxy silane; epoxy-containing silane such as γ-glycidoxypropyltrimethoxy silane, γ-glycidoxypropyltriethoxy silane, γ-glycidoxypropylmethyldimethoxy silane, β-(3,4-epoxycyclohexyl)ethyltrimethoxy silane and β-(3,4-epoxycyclohexyl)ethyltriethoxy silane; carboxy silane such as β-carboxyethyltriethoxy silane, β-carboxyethylphenylbis(2-methoxyethoxy) silane and N-β-(carboxymethyl)aminoethyl-γ-aminopropyltrimethoxy silane; unsaturated vinyl-containing silane such as vinyltrimethoxy silane, vinyltriethoxy silane, γ-methacryloyloxypropylmethyldimethoxy silane and γ-acryloyloxypropylmethyltriethoxy silane; halogen-containing silane such as γ-chloropropyltrimethoxy silane; isocyanurate silane such as tris(trimethoxysilyl) isocynurate; and isocyanate-containing silane such as γ-isocyanate propyltrimethoxy silane, γ-isocyanate propyltriethoxy silane, γ-isocyanate propylmethyldiethoxy silane and γ-isocyanate propylmethyldimethoxy silane. Further, modified derivatives thereof, that is, an amino-modified silyl polymer, a silylated amino polymer, an unsaturated aminosilane complex, a block isocyanate silane, a phenyl amino long-chain alkyl silane, aminosilylated silicone, and silylated polyester can also be used as silane coupling agents. Further, partial hydrolyzate condensates thereof can also be used as the silane coupling agent.

Specific examples thereof include amino-containing silane coupling agents such as A-1120 (Nippon Unicar Company Limited), A-1100 (Nippon Unicar Company Limited), KBE-603 (Shin-Etsu Chemical Co., Ltd.) and KP-390 (Shin-Etsu Chemical Co., Ltd.). As the mercapto-containing coupling agent, mention is made of A-189 (Nippon Unicar Company Limited), AZ-6139 (Nippon Unicar Company Limited) and KP-391 (Shin-Etsu Chemical Co., Ltd.).

The content of the silane coupling agent in the primer composition of the present invention is preferably 0.5 to 30% by weight, more preferably 1 to 20% by weight, still more preferably 2 to 10% by weight. A content of the silane coupling agent outside of the above range is not preferable because when the content is higher than 30% by weight, the shelf stability of the primer composition may be deteriorated, while when the content is less than 0.5% by weight, the effect of improving adhesion may not be sufficient. The silane coupling agents may be used alone or as a mixture of two or more thereof.

The primer composition of the present invention can employ adhesion-imparting agents other than the silane coupling agent, for example a phenol resin, an epoxy resin, a titanate coupling agent, a polyisocyanate compound and a silicon-modified polyurethane resin.

In the present invention, a silanol condensation catalyst can be used as a component functioning in curing and air-drying of the primer composition.

The silanol condensation catalyst includes, for example, divalent and tetravalent tin-based curing catalysts, aluminum-based catalysts, amine-based catalysts and organotitanates. Among these, the organotitanates are more preferable because the resulting primer composition is particularly excellent in adhesion.

The organotitanates include organotitanates, titanium chelate compounds, titanium silicate chelate compounds, titanate-based coupling agents, and partial hydrolyzate condensates thereof. The organotitanates include, for example, tetraisopropyl titanate, tetra normal butyl titanate, butyl titanate dimer, tetrakis(2-ethylhexyl)titanate, tetrastearyl titanate, tetramethyl titanate, diethoxybis(acetylacetonato)titanium, diisopropyl bis(acetylacetonato)titanium, diisopropoxybis(ethylacetoacetate)titanium, isopropoxy(2-ethyl-1,3-hexanediolato)titanium, di(2-ethylhexoxy)bis(2-ethyl-1,3-hexanediolato)titanium, di-n-butoxybis(triethanolaminato)titanium, tetraacetylacetonate titanium, hydroxybis(lactato)titanium and hydrolyzate condensates thereof.

These catalysts may be used alone or as a mixture of two or more thereof.

The content of the silanol condensation catalyst in the primer composition of the present invention is preferably 0.2 to 30% by weight, more preferably 0.5 to 20% by weight, particularly preferably 1 to 10% by weight. The silanol condensation catalysts may be used alone or as a mixture of two or more thereof. When the content of the silanol condensation catalyst is lower than the above range, the film-forming speed may be decreased and a sufficient film may be hardly formed. On one hand, when the content of the silanol condensation catalyst is higher than the above range, the open time is so short that workability may be deteriorated, and shelf stability is insufficient.

In the present invention, a solvent can be used in the primer composition to adjust the viscosity suitably for the operation of applying the primer. The solvent is not particularly limited insofar as it can dissolve the components (A) to (E) in the present invention. Examples of such solvents include hydrocarbon solvents such as toluene, xylene, heptane, hexane and petroleum-based solvent, halogenated solvents such as trichloroethylene, ester solvents such as ethyl acetate and butyl acetate, ketone solvents such as acetone, methyl ethyl ketone and methyl isobutyl ketone, alcohol solvents such as methanol, ethanol and isopropanol, and silicone solvents such as hexamethyl cyclotrisiloxane, octamethyl cyclotetrasiloxane and decamethyl cyclopentasiloxane. These solvents may be used alone or as a mixture of two or more thereof.

The amount of the solvent is preferably about 100 to 10,000 parts by weight, more preferably 200 to 2,000 parts by weight, relative to 100 parts by weight of the total amount of the components (A) and (B). When the amount of the solvent is lower than the above range, the viscosity of the primer composition is so high that workability is deteriorated. When the amount of the solvent is higher than the above range, the film formability of the resulting composition to porous substrates may be deteriorated.

Various antioxidants and weatherable adhesion improvers are used if necessary in the primer composition of the present invention. Examples of such additives are described in JP-A 11-343429.

The primer composition of the present invention can be compounded if necessary with various additives besides the components (A) to (E), the above-mentioned plasticizers, solvents, antioxidants and weatherable adhesion improvers.

Examples of such additives include physical property modifiers for modifying the tensile properties of a cured film, shelf stability improvers, radical inhibitors, metal-inactivating agents, ozone deterioration inhibitors, sag inhibitors, fillers, lubricants, pigments and foaming agents.

Examples of such additives are described in for example JP-B 4-69659, JP-B 7-108928, JP Patent No. 2512468 and JP-A 64-22904.

The bonding method of the present invention is concerned with an improvement in the adhesion of a sealant, which is achieved by applying the primer composition comprising the components (A) and (B) onto a substrate and then allowing a sealant to adhere to the coated surface of the substrate.

As the sealant applied onto the primer layer in the present invention, use can be made of sealants based on modified silicone, silicone, polyurethane, acryl urethane, polysulfide, modified polysulfide, butyl rubber, acryl, SBR, and a fluorine-containing material, oil caulking materials, silicone mastics, and sealants based on saturated hydrocarbon polymers having reactive silicon groups. The primer composition of the present invention is effective when applied especially to sealants based on the saturated hydrocarbon polymers having reactive silicon groups, and it is particularly preferable for excellent adhesion that the primer composition is applied to sealants based on isobutylene polymers having reactive silicon groups (for example, isobutylene sealants disclosed in JP-B 4-69659).

The primer composition of the present invention can be used to bond various sealants strongly to various substrates, for example various metals such as iron, stainless steel, aluminum, nickel, zinc, and copper, synthetic resin materials such as acryl resin, phenol resin, epoxy resin, polycarbonate resin, polybutylene terephthalate resin, an acryl electrodeposited coating and a fluorine coating, building stone such as glass, ceramics, cement, concrete, slate, marble and granite, inorganic materials such as mortar, and previously applied sealants based on modified silicone, silicone, polyurethane, acryl urethane, polysulfide, modified polysulfide, butyl rubber, acryl, SBR, a fluorine-containing material, and isobutylene. In particular, the primer composition of the present invention can be used to bond various sealants strongly to porous substrates such as concrete, mortar and slate, and is excellent in water-resistant adhesion. ,

The primer composition of the present invention can be applied onto a substrate by a conventional coating method such as a brushing method, a spray coating method, a wire bar method, a blade method, a roll coating method and a dipping method. The primer composition of the present invention can be formed into a film usually at ordinary temperatures, but a film may be formed at each temperature to adjust a film-forming speed.

### BEST MODE FOR CARRYING OUT THE INVENTION

Hereinafter, the present invention is described in more detail by reference to the Examples and Comparative Examples, but the present invention is not limited thereto.

### Production Example 1

50 g of toluene was introduced into a reactor equipped with a stirrer, a thermometer, a nitrogen introducing tube, a dropping funnel and a condenser, and then heated at 110°C. Thereafter, a solution of 50 g of γ-methacryloxypropyltrimethoxy silane, 50 g of methyl methacrylate and 0.5 g of 2,2'-azobis(2-methylbutyronitrile) in 50 g of toluene was introduced continuously to the reactor over 3 hours. After the solution was added, the mixture was further polymerized for 2 hours, to give a solution of a reactive silicon-containing vinyl polymer (A-1) having a solids content of 50% and a (polystyrene-equivalent) number-average molecular weight (Mn) of 22,000 as determined by GPC.

### Production Examples 2 to 9

Toluene solutions of 50 weight% reactive silicon-containing vinyl polymers (A-2 to A-5, B-1 to B-3, and X) were obtained in the same manner as in Production Example 1 except that the compounding ratio of the monomers was changed as shown in Table 1.

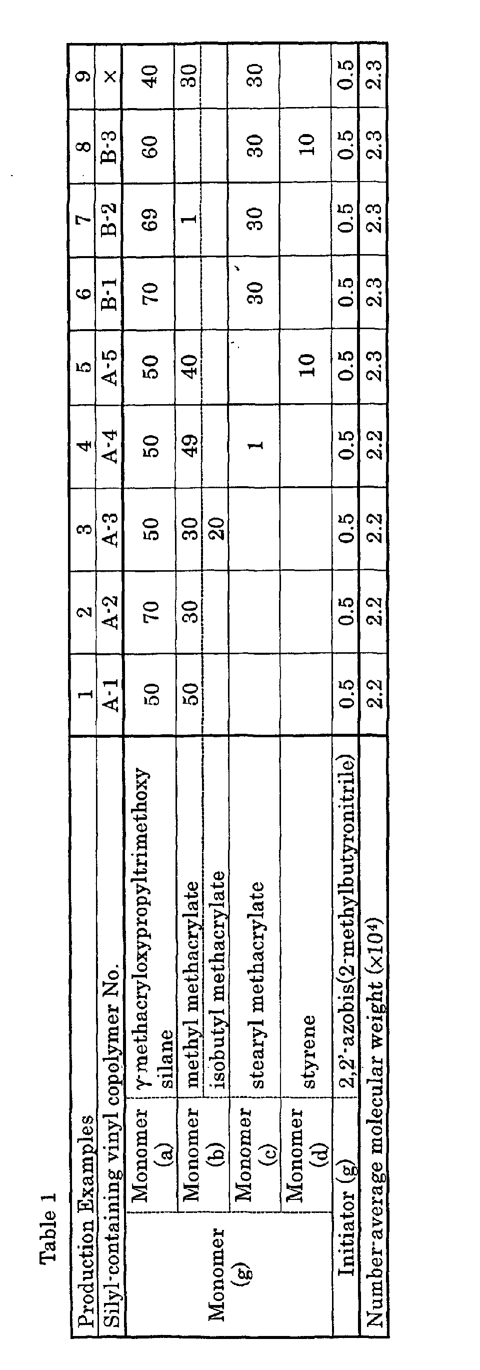

### Examples 1 to 10 and Comparative Example 1 to 5

The reactive silicon-containing vinyl polymers (50% solutions in toluene; A-1 to A-5, B-1 to B-3, and X) obtained,in Production Examples 1 to 9 were mixed with other various additives in a weight ratio shown in Table 2, to prepare primers.

In Examples 1 to 10 and Comparative Examples 1 to 5, the adhesion was evaluated in the following method. The surface of a slate plate with dimensions of 5×5×0.3 cm was coated twice by a brush with a primer in Table 2. The slate plate was left at 23°C for 30 minutes or more to form a primer layer as a coating on which an isobutylene-based sealant (trade name: Penguinseal 7000 manufactured by Sunstar Engineering Inc.) was then applied to a thickness of 5 mm. After curing at 23°C×3 days + 50°C×4 days, an about 1 cm cut was given to the bonded surface by a cutter knife, the cured product was released from the substrate by peeling with hands, and then the surface of the substrate was observed to evaluate initial adhesion. Water-resistant adhesion was evaluated in the following manner. An isobutylene-based sealant was applied to a slate plate in the same manner as described above, then cured at 23°C×3 days + 50°C×4 days, and immersed in water filling a plastic vessel at 23°C×7 days, and then immediately subjected to the hand peel test described above. The compositions of the primers and the evaluation results of the adhesion test are shown collectively in Table 2. In the table, ○ indicates cohesive failure, Δ indicates partial adhesive failure, and × indicates adhesive failure.

The primer compositions in Comparative Examples 1 to 3, which were comprised of the component (A) only as the reactive silicon-containing vinyl polymer, were excellent in initial adhesion but were poor in water-resistant adhesion to cause adhesive failure. The primer composition in Comparative Example 4, which was comprised of the component (B) only as the reactive silicon-containing vinyl polymer, caused adhesive failure with respect to both initial adhesion and water-resistant adhesion. Further, the primer composition in Comparative Example 5, which was comprised, as the silyl-containing vinyl polymer, of only the polymer (X) produced by copolymerizing the monomers (a), (b) and (c) as major components, was excellent in initial adhesion but was poor in water-resistant adhesion to cause adhesive failure.

On the other hand, the primer compositions in Examples 1 to 10, to which both the components (A) and (B) were added, were excellent in initial adhesion and showed cohesive failure or partial cohesive failure with respect to water-resistant adhesion.

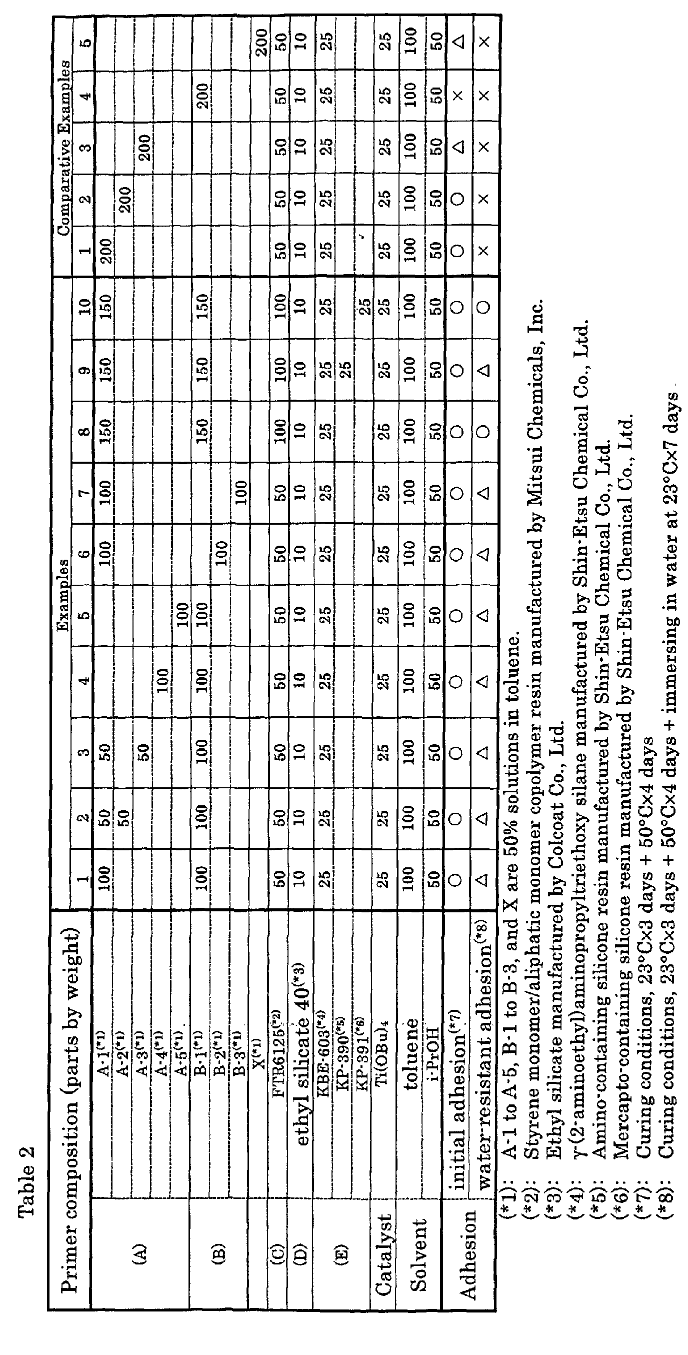

### Example 11

The surface of a slate plate having dimensions of 5×5×0.3 cm was coated twice by a brush with a primer having the same composition as in Example 10 in Table 2. The slate plate was left at 23°C for 30 minutes or more to form a primer layer as a coating on which a modified silicone-based sealant (trade name: Hamatite Super II manufactured by Yokohama Rubber Co., Ltd.) was then applied to a thickness of 5 mm. When the initial adhesion (curing conditions: 23°C×3 days + 50°C×4 days) and water-resistant adhesion (curing conditions: 23°C×3 days + 50°C×4 days + immersing in water at 23°C×7 days) were evaluated, cohesive failure were shown after both the conditions.

### INDUSTRIAL APPLICABILITY

The primer composition of the present invention can significantly improve adhesion to porous substrates. This effect is particularly useful upon application to isobutylene sealants.

## Claims

1. A primer composition comprising:
(A) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (b) 20 to 95 wt% of an alkyl (meth)acrylate monomer wherein the alkyl has 1 to 8 carbon atoms; and
(B) a vinyl copolymer obtained by copolymerizing a monomer component comprising (a) 5 to 80 wt% of a monomer having a silicon-containing group which bears a hydroxyl or hydrolyzable group bonded to the silicon atom and causes crosslinking via the formation of a siloxane linkage and (c) 20 to 95 wt% of an alkyl (meth)acrylate monomer wherein the alkyl has 10 or more carbon atoms.

2. The primer composition according to claim 1, which further comprises an tackifier as component (C).

3. The primer composition according to claim 1 or 2, which further comprises a silicate compound as component (D).

4. The primer composition according to any one of claims 1 to 3, which further comprises a silane coupling agent as component (E).

5. The primer composition according to claim 4, wherein the silane coupling agent as component (E) is an amino-containing silane coupling agent and/or a mercapto-containing silane coupling agent.

6. The primer composition according to any one of claims 1 to 5, wherein the vinyl copolymer as component (A) and the vinyl copolymer as component (B) have a number-average molecular weight in the range of 500 to 50,000, and bear at least one hydrolyzable silyl group per molecule at the end of a main chain and/or the end of a side chain, the silyl group being represented by the general formula (1): 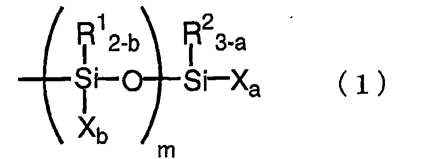 wherein R¹ and R² independently represent a C₁₋₂₀ alkyl group, a C₆₋₂₀ aryl group, a C₇₋₂₀ aralkyl group, or a triorganosiloxy group represented by (R')₃SiO- whereupon R' groups independently represent a C₁₋₂₀ substituted or unsubstituted hydrocarbon group; X groups independently represent a hydroxyl group or a hydrolyzable group; a is 0, 1, 2 or 3 and b is 0, 1 or 2 provided that a and b are not simultaneously 0; and m is 0 or an integer of 1 to 19.

7. A method of bonding a sealant to a substrate, **characterized by** applying the primer composition of any one of claims 1 to 6 onto a substrate and then allowing a sealant to adhere to the resulting coated surface of the substrate.

8. The bonding method according to claim 7, wherein the sealant is a sealant based on an organic polymer having at least one silicon-containing group which bears a hydroxyl or hydrolyzable group bonded to the silicon atom and causes crosslinking via the formation of a siloxane linkage.

9. The bonding method according to claim 8, wherein the sealant is an isobutylene sealant based on an isobutylene polymer having at least one silicon-containing group which bears a hydroxyl or hydrolyzable group bonded to the silicon atom and causes crosslinking via the formation of a siloxane linkage.
